# EUROPEAN PATENT APPLICATION

(11) **EP 4 599 919 A1**
(43) Date of publication of application: **13.08.2025**
(21) Application number: 24155896.4
(22) Date of filing: 06.02.2024
(51) Int. Cl.: B01D 53/04, B01D 46/52, B01D 46/00, B01D 51/10, B60H 3/06

(54) **SORPTION FILTER, SORPTION FILTER CARTRIDGE AND METHOD FOR PRODUCING SORPTION FILTER**

(71) Applicant: MANN+HUMMEL GmbH, 71636 Ludwigsburg (DE)
(72) Inventor: WELLER, Benedikt, 71636 Ludwigsburg (DE); WÖRZ, Tobias, 71636 Ludwigsburg (DE)
(74) Representative: Mann + Hummel Intellectual Property

(57) **Abstract**

A sorption filter (9) includes a sorbent granulate layer (41) configured to adsorb and/or absorb gases, in particular CO2, water and/or VOCs, a first material layer (42) having a pleated shape, and a second material layer (43) having the pleated shape, the first material layer (42) and the second material layer (43) sandwiching the sorbent granulate layer (41) so that the sorbent granulate layer (41) has the pleated shape.

## Description

### Technical Field

The present invention relates to a sorption filter, a sorption filter cartridge having such a sorption filter and a method for producing a sorption filter for a vehicle.

### Background Art

In the case of vehicles that are at least partially electrically powered, it is advisable to save as much energy as possible in order to achieve the longest possible range. For reasons of comfort, the passenger compartment of such a vehicle can usually be air conditioned with the aid of an air conditioning system. With regard to the desired energy savings, it is advantageous if the air conditioning system for air conditioning the passenger compartment draws in as little fresh air as possible from the vehicle's surroundings and heats or cools it, but instead recirculates and air conditions the air in the passenger compartment.

In the aforementioned recirculation mode for air conditioning the passenger compartment, however, water contained in the exhaled air of occupants or passengers can accumulate in the passenger compartment, which can lead to fogging of windows, for example a windshield or side windows, of the motor vehicle. The reason for this is that the dehumidifying effect of an air conditioning system, which results from a dew point undershoot in the evaporator heat exchanger, cannot be used during the recirculation mode. This must be avoided or at least reduced with regard to safety aspects.

Furthermore, carbon dioxide contained in the exhaled air can also accumulate in the passenger compartment. This can lead to concentration problems or even health problems for the occupants. This, too, must be prevented or at least reduced with regard to both safety and health aspects, since in the worst-case scenario, an excessively high concentration of carbon dioxide in the passenger compartment air can reduce the driver's ability to concentrate to such an extent that accidents are imminent.

### Summary

It is therefore an object of the invention to provide an improved sorption filter.

Accordingly, a sorption filter, in particular for a vehicle, is provided. The sorption filter includes a sorbent granulate layer configured to adsorb and/or absorb gases, in particular CO2, water and/or VOCs, a first material layer having a pleated shape, and a second material layer having the pleated shape, the first material layer and the second material layer sandwiching the sorbent granulate layer so that the sorbent granulate layer has the pleated shape.

The pleated shape has the advantage that a contact surface of the sorption filter can be increased and thus the pressure in the filter can be reduced. Thus, a pressure energy loss for adsorbing and/or absorbing gases can be reduced. Therefore, the vehicle becomes more energy efficient.

The sorption filter is provided as a sorption interior filter. The filter is particularly suitable for adsorbing and/or absorbing gases, in particular CO2 (carbon dioxide), water and/or VOCs (volatile organic compounds). However, also substances like nitrogen oxides (NOX) can be adsorbed and/or absorbed by the sorption filter. Examples of volatile organic compounds are higher hydrocarbons. The sorption filter cartridge may also be suitable for adsorbing and/or absorbing sulfur dioxide (SO2).

In the present context, "sorption" refers to processes that lead to an enrichment of a substance, for example carbon dioxide or water, within a phase or on an interface between two phases. Accumulation within a phase is referred to as absorption, while accumulation at the interface is referred to as adsorption. For example, by applying heat to the sorption filter, the adsorbed and/or absorbed substances can be released from the sorbent granulate layer.

The first material layer and/or the second material layer may be a non-woven fiber material. For example, the non-woven fiber material is a spunbonded fiber material. The first and the second material layers can be made of the same non-woven fiber material. However, the first and the second material layers can also be made of different non-woven fiber materials. The granulate layer being "sandwiched" between the first material layer and the second material layer means that the granulate is arranged between the layers. The first and the second material layers prevent the sorbent granulate from falling out of the sorption filter. Preferably, the first material layer is thicker than the second material layer or the second material layer is thicker than the first material layer. Alternatively, the first and the second material layer may have the same thickness. The first material layer and/or the second material may be provided as a filter mat or filter pad. For example, the first material layer or the second material layer may be a pre-filter material protecting the granulate from raw dust. Pre-filter means that the pre-filter material is configured to prefilter the unfiltered air before it reaches the sorbent granulate layer.

The sorbent granulate is provided as a bulk material which is shaped to form the layer having the pleated shape. The sorbent granulate may include carbon adsorbents, in particular activated carbon and/or activated coke and/or carbon molecular sieves. Alternatively or additionally, the sorbent granulate may include oxidic adsorbents, in particular zeolites and/or silica gel and/or clay minerals and/or activated alumina. Alternatively or additionally, the sorbent granulate may include adsorber polymers and/or resins, in particular polystyrene and/or polyacrylate and/or phenolic adsorber resins.

"Pleated shape" may mean wave-shaped and/or sinus-shaped. Wave crests and/or wave valleys of the pleated shape may be arc-shaped or angular shaped, e.g., triangular-shaped or rectangular-shaped. "Vehicle" may mean a passenger car or a truck.

In embodiments, the sorption filter further includes a frame framing the sorbent granulate layer, the first material layer and the second material layer by enclosing end faces thereof. Closing the end faces with the frame has the advantage that the granulate is tightly sealed and fixed inside frame, the first and the second material layer. For example, the frame has a length between 200-350 mm, in particular 250-300 mm. The frame may have a width between 100-250 mm, in particular 150-200 mm. The frame may have a height between 20-60 mm, in particular 30-40 mm. The frame may be rectangular shaped. The frame may have two longitudinal portions opposite to each other and two head portions opposite to each other and arranged perpendicular to the longitudinal portions. The two head portions and e.g., one longitudinal portion may be shaped in one-piece or integrally, e.g., by means of injection molding. For example, the frame can be provided as open frame with an opening for filling the granulate between the first and the second material layer. The opening can be closed by means of a closing element to form a closed frame. For example, the closing element may be glued to the open frame. In particular, the closing element may be a cover.

In embodiments, the sorption filter further includes a first plastic grid layer and a second plastic grid layer sandwiching the sorbent granulate layer, the first material layer and the second material layer. For example, the first material layer is attached to the first plastic grid layer. Thus, the first plastic grid layer may support the first material layer. In particular, the second material layer is attached to the second plastic grid layer. Thus, the second plastic grid layer may support the second material layer. The first plastic grid layer may have a stiff connection to the frame. Further, the first and the second plastic grid layers include a plurality of openings such that air can pass the first and the second material layer and the sorbent granulate layer through the openings. Preferably, the first material layer is glued to the first plastic grid layer. Alternatively or additionally, the first material layer may be glued to the frame. In particular, the second material layer is glued to the second plastic grid layer. Alternatively or additionally, the second material layer may be glued to the frame.

In embodiments, the first plastic grid layer and the second plastic grid layer are connected to the frame by one among injection molding to form an integral body, gluing and welding. This has the advantage that the frame and both plastic grid layers may provide cost efficiently. Preferably, the open frame may be produced together with the first plastic grid layer and the second plastic grid layer by means of injection molding top form the integral or one-piece body.

In embodiments, the first plastic grid layer and the second plastic grid layer are wave-shaped and configured to stabilize the sorbent granulate layer, the first material layer and the second material layer in the pleated shape. This has the advantage that a stiff and reliable sorption filter may be provided. Further, the second plastic grid layer may have a stiff connection to the frame. For example, the first plastic grid layer and the second plastic grid layer are arranged parallel such that a wave-shape of the first plastic grid layer is coherent to a wave-shape of the second plastic grid layer. In particular, the first and/or the second plastic grid layer includes reinforcement elements, in particular stiffening ribs, at wave valleys.

In embodiments, each of the first material layer and the second material layer is a filter fleece layer or a metal mesh layer. This has the advantage that a cost efficient and reliable material can be provided to hold the granulate in shape such that it does not penetrate the fleece or metal layers. Further, a compact fill of the sorbent granulate layer may be provided.

In embodiments, the sorption filter has a length between 200-350 mm, in particular 250-300 mm, a width between 100-250 mm, in particular 150-200 mm, and a height between 20-60 mm, in particular 30-40 mm. Thus, an efficient filter designed for a vehicle can be provided. Preferably, an outermost contour of the sorption filter may have a length between 200-500 mm, in particular 300-350 mm, and/or a width between 150-250 mm, in particular 180-230 mm, and/or a height between 40-70 mm, in particular 40-50 mm. The sorbent granulate layer has a thickness between 3-20 mm, in particular 5-10 mm.

In embodiments, the sorption filter further includes a filter sealing including a filter sealing surface configured to be pressed against a cartridge sealing surface. Thus, the incoming air can be filtered without leakage. Preferably, the filter sealing is connected to the frame. In particular, the filter sealing is frame-shaped. In particular, the filter sealing is made of a softer material than the frame. The filter sealing may be made from an elastomer material, e.g., rubber or polyurethane (PUR). The frame may be provided from a thermoplastic material.

In embodiments, the sorption filter further includes at least one pressure receiving element configured to receive a pressure force from a cartridge pressure element. This has the advantage that a contact pressure can be distributed equally in the sorption filter and that the sorption filter is not deformed by the pressure force. In particular, the pressure receiving elements are provided as projections and/or domes integrally formed with the first plastic grid layer and/or the second plastic grid layer.

Further, a sorption filter cartridge is provided. The sorption filter cartridge includes the sorption filter and a housing configured to receive the sorption filter.

All embodiments and features explained for the sorption filter apply also to the sorption filter cartridge and vice versa. The housing may preferably include injection molded plastic parts. Further, the housing may include connecting elements to connect different parts of the housing together. The connecting elements may be screws. The housing may include mounting elements for being mounted, in particular releasably mounted, in the vehicle. Preferably the housing has a tapered shape. In particular, the housing may be bell-shaped. The housing may include a thermoplastic material, in particular is fully build form the thermoplastic material.

For example, in a sorption mode, the sorption filter cartridge adsorbs and/or absorbs different substances like carbon dioxide and/or water. In particular, in a desorption mode, the enriched substances can be released from the sorption filter cartridge. Thus, the sorption filter cartridge can be regenerated. In the desorption mode, heat may be applied to the sorption filter cartridge, in particular to the sorbent granulate layer. The sorption filter cartridge may be a pure adsorption filter cartridge or may be designated as such. Preferably, the sorption filter cartridge can be easily and quickly replaced. The sorption mode may also be, or be designated as, a pure adsorption mode. The desorption mode may also be referred to as regeneration mode.

The sorption filter cartridge preferably includes several sorbents. In particular, a sorbent suitable to sorb, especially to adsorb, carbon dioxide may be provided. This sorbent may be referred to as carbon dioxide sorbent or CO2 sorbent. Another sorbent may be provided that is suitable to sorb, especially adsorb, water. This sorbent may be referred to as water sorbent or H2O sorbent. The sorbent is in granular form, in particular in bulk form. In particular, the sorbents are fixed by means of a carrier material. The sorbents may also be pure adsorbents or be designated as such.

In embodiments, the housing includes a housing portion having at least one pressure element, in particular having a pressure spring, and a housing portion including a cartridge sealing surface. The at least one pressure element is configured to press the sorption filter against the cartridge sealing surface. The pressure elements facilitate that the sorption filter is preloaded against the cartridge sealing surface. This has the advantage, that a mounting position of the sorption filter can be hold in place in a stable way. The housing may include a first housing portion, a second housing portion and third housing portion. The second housing portion may be sandwiched by the first housing portion and the third housing portion. The second housing portion may receive the sorption filter. The second housing portion may be connected to the first housing portion by means of screws. The second housing portion may be connected to the third housing portion by means of screws. Alternatively, or additionally, other connection elements can be provided, e.g., clip connections, to connect the housing portions to each other. Further, the first housing portion or the third housing portion can be provided as on integral element with the second portion. Preferably, the first housing portion includes at least 2, 3, 4, 5 or 6 first pressure elements. In particular, the third housing portions may include at least 2, 3, 4, 5 or 6 second pressure elements. For example, the first pressure elements are configured to apply a first pressure force on the sorption filter and the second pressure elements are configured to apply a second force being a counter force, wherein the second force is larger than the first force. Therefore, the sorption filter can be hold even more stable in an operating position. In another embodiment, the third housing portion may include 2, 3, 4, 5 or 6 pressure receiving elements configured to receive respectively pressure forces from the first pressure elements of the first housing portion.

In embodiments, the sorption filter cartridge further includes an air intake configured to receive unfiltered air form an interior of a vehicle and/or from an environment of the vehicle, and an air outlet configured to let out filtered air to the interior of the vehicle. For example, the first housing portion may include a first chamber such that inflowing air may come first through the air intake into the first chamber. The first chamber may have a tapered shape. Then the inflowing air may pass the sorption filter and enter filtered another chamber of the third housing portion. From the other chamber the filtered air may leave the cartridge through the air outlet. The other chamber may have a tapered shape. The first chamber and the other chamber may have a symmetrical shape.

Further, a motor vehicle including at least one, in particular two, such sorption filter and or at least one, in particular two, such sorption filter cartridge.

The motor vehicle may be a passenger car, a truck, a tractor and the like.

Furthermore, a method for producing a sorption filter, in particular for a vehicle, is provided. The method includes fixing a first material layer having a pleated shape and a second material layer having the pleated shape to be distant to each other such that a wave-shaped hollow space between the first material layer and the second material layer and having an opening is provided. The method further includes filling a granulate into the hollow space through the opening such that the granulate is sandwiched between the first material layer and the second material layer; and closing the opening such that the granulate is fixed in the sorption filter.

The step of fixing is provided before the step of filling. Further, the step of filling is provided before the step of closing the opening. In particular, the method is designed for producing such a sorption filter. All embodiments and features explained for the sorption filter apply also to the method and vice versa. In a preprocessing step the first material and the second material may be pleated to form permanently the pleated shape. Preferably, only one opening formed by end face of the first material and the second material is provided. "Filling the granulate" may mean pouring it into the hollow space by means of gravity. The hollow space is filled until a compact bulk is facilitated and no rattling occurs. Thus, decomposition of the sorption filter may be avoided, and a reliability can be improved.

In embodiments, the first material layer and the second material layer are fixed using an open frame, a first plastic grid layer and a second plastic grid layer, the first plastic grid layer and the second plastic grid layer being connected to the open frame and being distant to each other, the first material layer being fixed to the first plastic grid layer, and the second material layer being fixed to the second plastic grid layer. Thus, the hollow space may be provided as a stable pocket for the granulate. Preferably, the first material layer is glued to the first plastic grid layer and/or the frame. In particular, the second material layer is glued to the second plastic grid layer or the frame.

In embodiments, the opening is closed by a closing element closing the open frame to form a closed frame. Thus, the granulate can be hold in the hollow space without leakage. Preferably, the frame portion and the open frame are glued or welded together. The frame portion is a closing element, e.g., a cover.

### Brief Description of Drawings

Fig. 1 is a schematic view of one embodiment of a motor vehicle.
Fig. 2 is a cross-sectional view of a cartridge for the motor vehicle according to Fig. 1.
Fig. 3 is a perspective view of a first housing portion of the cartridge according to Fig. 2.
Fig. 4 is a perspective view of a sorption filter of the cartridge according to Fig. 2.
Fig. 5 is a cross-sectional view of the sorption filter according to Fig. 4.
Fig. 6 is detail A2 of Fig. 5.
Fig. 7 is a schematic block diagram of a method for producing a sorption filter according to Fig. 5.
Fig. 8 is a schematic view of method steps of the method according to Fig. 7.

In the figures, identical or functionally identical elements have been given the same reference signs unless otherwise indicated.

### Description of Embodiments

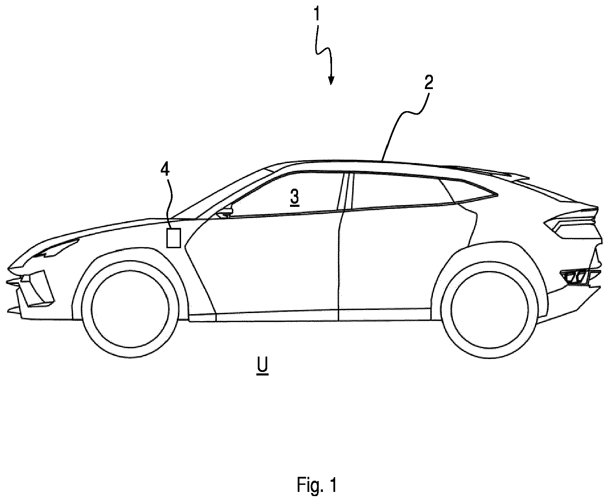

Fig. 1 shows a schematic view of an embodiment of a motor vehicle 1. The motor vehicle 1 is preferably an electric vehicle or a hybrid vehicle. However, the motor vehicle 1 may also be driven by means of an internal combustion engine. The motor vehicle 1 includes a body 2 which encloses an enclosed air volume in an interior 3. "Enclosed" in this context means that the body 2 defines boundaries or a geometric extension of the enclosed air volume in the interior 3. However, this does not necessarily mean that the enclosed air volume in the interior 3 cannot be in air exchange with an environment U of the motor vehicle 1.

The interior 3 may be a passenger compartment of the motor vehicle 1. However, the interior 3 may also be associated with a truck, a tractor, a watercraft, a construction machine or a construction vehicle, a rail vehicle, an agricultural machine or an agricultural vehicle, or an aircraft.

In the following, however, it is assumed that the enclosed air volume in the interior 3 is the passenger compartment of the motor vehicle 1. The air of the interior 3 can be air filtered by means of a sorption filter cartridge 4. Therefore, the sorption filter cartridge 4 may filter air from the environment U and/or form the interior 3. To extend a range, e.g., of an electrically driven motor vehicle 1, it is desirable to save as much energy as possible. With reference to the sorption filter cartridge 4, this means that it should draw in as little fresh air as possible from the environment U of the motor vehicle 1 to filter the air for the passenger compartment 3. Further, a reduced pressure in the filter cartridge 4 may reduce the energy consumption.

However, when recirculated air taken in the interior 3 is used to air condition the passenger interior 3, water (H2O) contained in the exhaled air of occupants or passengers may accumulate in the interior 3, which may cause windows, for example a windshield or side windows, of the motor vehicle 1 to fog. This must be avoided or at least reduced with regard to safety aspects. Furthermore, carbon dioxide (CO2) contained in the exhaled air can also accumulate in the interior 3. This can lead to concentration problems or even health impairments for the occupants. This, too, must be prevented or at least reduced with regard to both safety and health aspects.

With the cartridge 4, the previously mentioned disadvantages can be prevented, or their effect at least reduced. In addition, the cartridge 4 can also be used to prevent impurities from the environment U from entering the interior 3, since the preparation of the circulating air means that the intake of ambient air can be largely dispensed with.

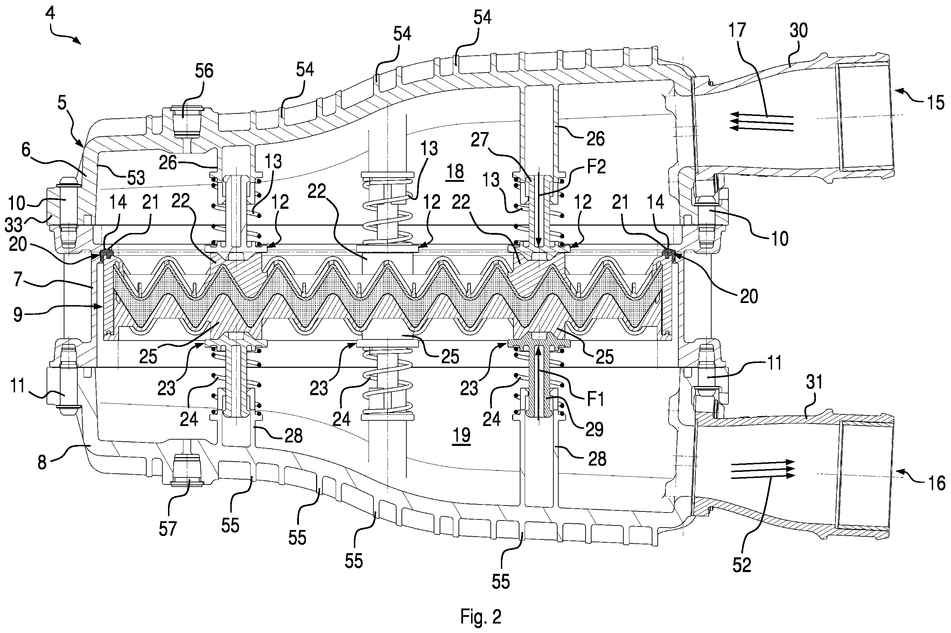

Fig. 2 shows a section of the cartridge 4 from Fig. 1. The cartridge 4 includes a housing 5. The housing 5 includes a first housing portion 6, a second housing portion 7 and third housing portion 8. The second housing portion 7 is sandwiched by the first housing portion 6 and the third housing portion 8. The second housing portion 7 receives a sorption filter 9. The second housing portion 7 is connected to the first housing portion 6 by means of screws 10. The second housing portion 7 is connected to the third housing portion 8 by means of screws 11. Alternatively, or additionally, other connection elements can be provided, e.g., clip connections, to connect the housing portions 6, 7, 8 to each other. Further, the first housing portion 6 or the third housing portion 8 can be provided as an integral element with the second portion 7.

Optionally the first housing portion 6 includes at least one pressure element 12. The pressure element 12 has a pressure spring 13 which is preloaded against the sorption filter 9.

The first housing portion 6 includes an air intake 15 for receiving unfiltered air 17 form a vehicle interior 3 and/or from the environment U of the vehicle 1, and an air outlet 16 for letting out filtered air 52 from the vehicle interior 3. Inflowing air 17 comes first through the air inlet 15 into a chamber 18 of the first housing portion 6. Then the air 17 passes the sorption filter 9 and enters filtered a chamber 19 of the third housing portion 8. From the chamber 19 the filtered air 52 leaves the cartridge 4 through the air outlet 16. For example, a blower (not shown) can be provided to blow unfiltered air 17 into the air intake 15 and the chamber 18. Alternatively, or additionally the filtered air 52 can be sucked from the air outlet 16 and the chamber 19 by the blower or a further blower.

The sorption filter 9 includes a filter sealing 20 with a filter sealing surface 21 configured to be pressed against a cartridge sealing surface 14. Thus, the chamber 19 is sealed against the unfiltered air 17 from the chamber 18. The filter sealing 20 may be made from rubber or PUR. The sorption filter 9 includes further at least one pressure receiving element 22 configured to receive a pressure force from the cartridge pressure element 12. In particular, the pressure receiving elements 22 are provided as projections or domes. The pressure receiving elements 22 are facing the chamber 18 of the first housing portion 6.

The third housing 8 includes pressure elements 23, in particular each having a pressure spring 24. The pressure elements 23 are pressed against pressure receiving elements 25 of the sorption filter 9. The pressure receiving elements 25 are facing the chamber 19 of the third housing portion 8. The pressure receiving element 25 may be provided as projections or domes. The second housing portion 7 includes a cartridge sealing surface 14. The pressure element 23 presses the sorption filter 9 against the cartridge sealing surface 14. Therefore, leakage can be avoided. The cartridge sealing surface 14 is frame-shaped.

The pressure elements 23 are providing a first pressure force F1 which results in a contact pressure at the sealing surface 14. The pressure elements 12 are providing a second pressure force F2 which in sum is smaller than the first pressure force F1. Thus, the sorption filter 9 can be mounted in a stable and well-sealed position in the cartridge 4.

The first, second and third housing portions 6, 7, 8 may be made of plastic material. In particular, the housing portions 6, 7, 8 are produced by injection molding. The chamber 18 tapers towards an end 53 of the chamber 18. The chamber 19 has also a similar tapered shape. The cartridge 4 has a tapered shape. Preferably, the cartridge 4 has a bell-shape. The second housing 7 is provided as a rectangular shaped frame. The first housing portion 6 and the third housing portion 8 may be provided symmetrically. In particular, the first housing portion 6 and the third housing portion 8 may be provided identically, preferably apart from the springs 13 and the springs 24 having a different stiffness and/or length and/or shape.

The first housing portion 6 includes a tubular-shaped guiding element 26 for guiding the pressure element 12 having a tubular-shaped guiding portion 27 which is at least partially accommodated by the guiding element 26. The third housing portion 8 includes a tubular-shaped guiding element 28 for guiding the pressure element 23 having a tubular-shaped guiding portion 29 which is at least partially accommodated by the guiding element 28. Further, an inlet pipe 30 is connected to the first housing portion 6 forming the inlet 15. Furthermore, an outlet pipe 31 is connected to the third housing portion 8 forming the outlet 16.

The first housing portion 6 may include 2, 3, 4 or 5 pressure elements 12 and the same number of guiding elements 26. The third housing portion 8 may include 2, 3, 4 or 5 pressure elements 23 and the same number of guiding elements 28. The first housing portion 6 may include stiffening ribs 54. Further, the third housing portion 8 may include stiffening ribs 55. Further, the first housing portion 6 may include a plug and/or relief valve 56 which is closing the chamber 18. Furthermore, the third housing portion 8 may include a plug and/or relief valve 57 which is closing the chamber 19.

"Sorption" is a collective term for processes that lead to an accumulation of a substance within a phase or at an interface between two phases. The enrichment within a phase is more precisely called absorption, and that at the interface adsorption. This means that the sorption filter 9 is suitable for adsorbing and/or absorbing substances such as CO2 and H2O, but also nitrogen oxides (NOX) and/or volatile organic compounds (VOCs). Examples of volatile organic compounds are higher hydrocarbons. The sorption filter 9 may also be suitable for adsorbing and/or absorbing sulfur dioxide (SO2). Preferably, however, the sorption filter 9 is a pure adsorbing unit or may be designated as such. The sorption filter 9 is preferably changeable.

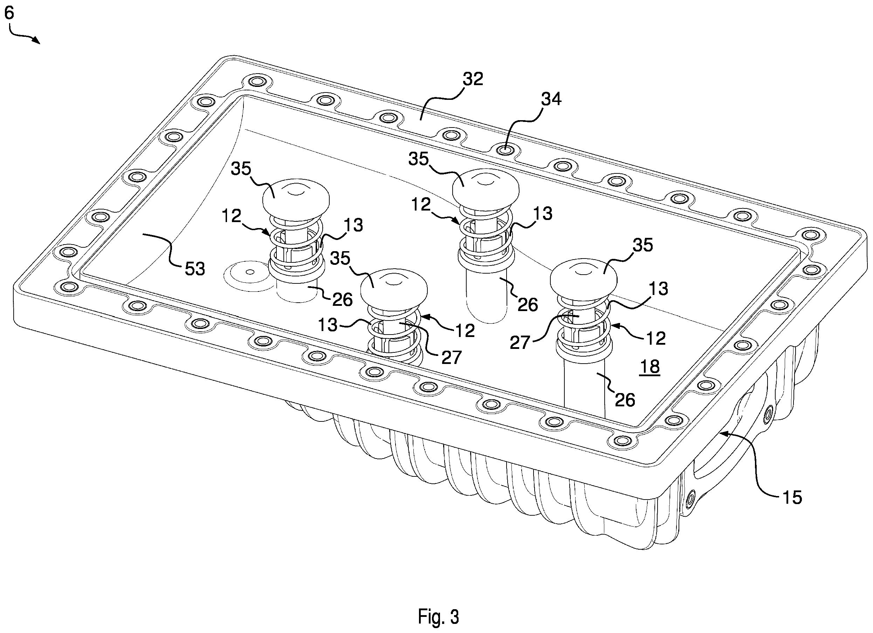

Fig. 3 shows the first housing portion 6 from Fig. 2 in a perspective view. The first housing portion 6 includes a flange 32 having a rectangular frame shape. The flange 32 is configured to be mounted to a flange 33 (see Fig. 2) provided at the second housing portion 7. The flange 32 includes a plurality of boreholes 34 for the screws 10 (see Fig. 2). The first housing portion 6 includes four guiding elements 26. The guiding elements 26 may have different lengths depending on the position thereof. The guiding elements 26 closer to the end 53 are shorter than the guiding elements 28 closer to the air intake 15.

Further, each guiding element 26 guides a pressure element 12. Each pressure element includes a head portion 35 having a mushroom-head-shape. The head portion 35 is e.g., integrally formed with the guiding portion 27. The spring 13 is configured to press the head portion 35 away from the guiding element 26. The head portions 35 may be provided as spring pretensioned domes.

For example, the third housing portion 8 (see Fig. 2) may have a similar shape as shown for the first housing portion 6.

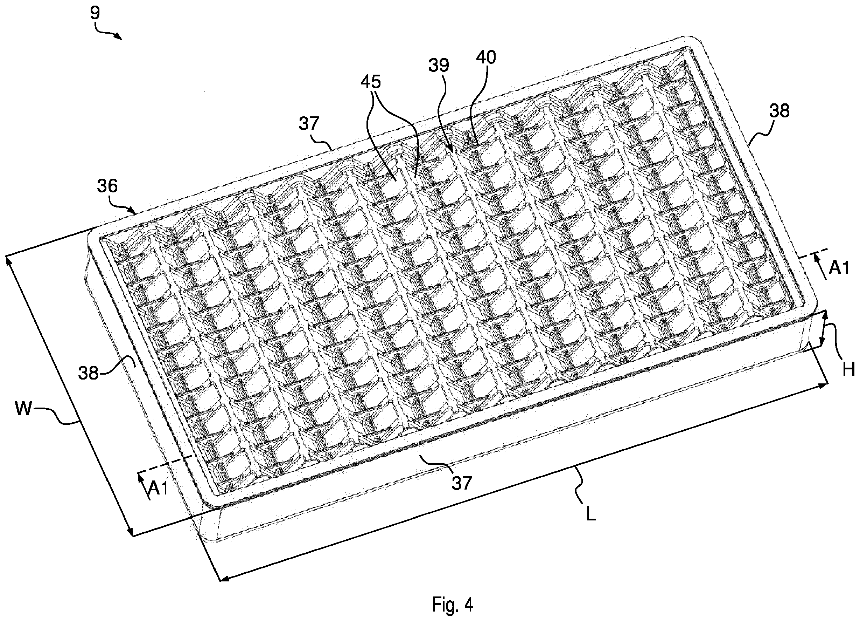

Fig. 4 shows one embodiment of the sorption filter 9 of Fig. 2 in a perspective view. The sorption filter 9 includes a frame 36 having two longitudinal portions 37 opposite to each other and two head portions 38 opposite to each other and arranged perpendicular to the longitudinal portions 37. The two head portions 38 and e.g., one longitudinal portion 37 may be shaped integrally or in one-piece, e.g., by means of injection molding. For example, the other longitudinal portion 37 may be connected to the rest of the frame 36 by means of gluing or welding.

The portions 37, 38 are forming an outer contour of the rectangular frame 36. The frame 36 has a length L between 200-350 mm, in particular 250-300 mm. The frame 36 has a width between 100-250 mm, in particular 150-200 mm. The frame 36 has a height H between 20-60 mm, in particular 30-40 mm.

The sorption filter 9 further includes a first plastic grid layer 39 connected to the frame 36, e.g., by means of injection molding to form an integral or a one-piece body. The first plastic grid layer 39 is wave-shaped. The first plastic grid layer 39 in particular includes reinforcement elements 40 provided at wave valleys. Further, the first plastic grid layer 39 includes a plurality of openings 45 such that air 17 (see Fig. 2) can pass the sorption filter 9.

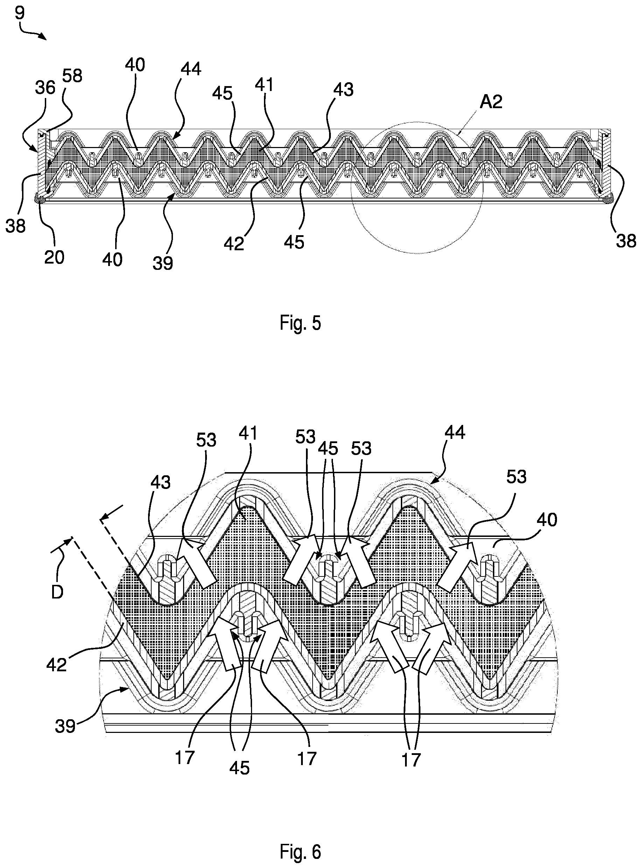

Fig. 5 shows a cross-sectional view A1 - A1 according to Fig. 4. The sorption filter 9 includes a sorbent granulate layer 41 configured to adsorb gases, in particular CO2, water and/or VOCs, a first material layer 42 and a second material layer 43 sandwiching the sorbent granulate layer 41 in a pleated shape.

Further, the sorption filter 9 includes the frame 36 framing the sorbent granulate layer 41, the first material layer 42 and the second material layer 43 by enclosing end faces thereof. Further, the frame includes the first plastic grid layer 39 and a second plastic grid layer 44 sandwiching the sorbent granulate layer 41, the first material layer 42 and the second material layer 43. The second plastic grid layer 44 includes a plurality of openings 45.

The first plastic grid layer 39 and the second plastic grid layer 44 are connected to the frame 36, e.g., by means of injection molding to form an integral or a one-piece body, or by means of gluing, or by means of welding. The first plastic grid layer 39 and the second plastic grid layer 44 are wave-shaped and configured to stabilize the sorbent granulate layer 41, the first material layer 42 and the second material layer 43 in the pleated shape. The first plastic grid layer 39 and the second plastic grid layer 44 may be coherently arranged such that the wave-shapes are arranged parallel.

Further, the frame 36 may include a frame-shaped attachment 58 connected to the longitudinal portions 37 and the head portions 38. The attachment 58 may be circumferential forming a rectangular frame which is connected to the longitudinal portions 37 and the head portions 38 which is covering an upper or lower side and partially an inner side of the longitudinal portions 37 and the head portions 38. The attachment 58 may be plugged and/or glued to the longitudinal portions 37 and the head portions 38. Further, the second plastic grid layer 44 may be connected to attachment 58 or may be an integral or a one-piece part of it.

The sealing 20 is connected to the longitudinal portions 37 and the head portions 38 at an opposite site than the attachment 58. It is noted that the sealing 20 could be also arranged at the other frame side, e.g., at the attachment 58. The sealing 20 may be provided form a softer and/or more flexible material than the longitudinal portions 37 and the head portions 38 of the frame 36. For example, the longitudinal portions 37 and the head portions 38 may be provided from thermoplastic material and the sealing may be provided from an elastomer material, e.g., rubber or PUR.

Fig. 6 shows detail A2 according to Fig. 5. The sorbent granulate layer 41 has a thickness D between 3-20 mm, in particular 5-10 mm. As shown in Fig. 6 the unfiltered air or raw air 17 passing the sorption filter 9 is indicated with arrows and is then filtered such that filtered air 52 is leaving the sorption filter 9.

A sorbent from the sorbent granulate layer 41 may be provided form sorbent granulates. The sorbent granulates are provided as a bulk material which is shaped to form the layer 41 having the pleated shape. The sorbent granulates may include carbon adsorbents, in particular activated carbon and/or activated coke and/or carbon molecular sieves. Alternatively, or additionally, the sorbent granulates may include oxidic adsorbents, in particular zeolites and/or silica gel and/or clay minerals and/or activated alumina. Alternatively, or additionally, the sorbent granulates may include adsorber polymers and/or resins, in particular polystyrene and/or polyacrylate and/or phenolic adsorber resins.

The sorbent granulates may also be provided suitable for sorbing NOX or VOCs, for example. In particular, the sorbent granulate can be provided for processing the circulating air in the interior 3. Furthermore, the sorption filter 9 can also be suitable for removing allergens, bacteria and/or viruses from the unfiltered air 17 in addition to CO2 and H2O. This can be done by a functional coating of carrier materials, for example non-wovens, or by a functional coating of the sorbents. Furthermore, the sorption filter 9 can have at least one fragrance component from a comfort aspect.

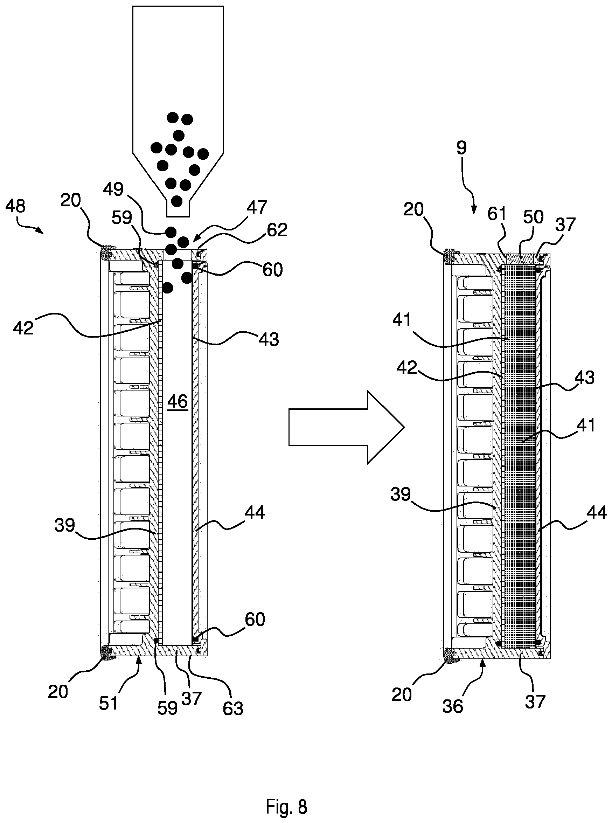

The first material layer 42 and/or the second material layer 43 holds the granulate 49 (see Fig. 8 left side) in place and prevents that granulate dust leaves the sorption filter 9. Further, the first material layer 42 prefilter the unfiltered air 17, e.g., from raw dust.

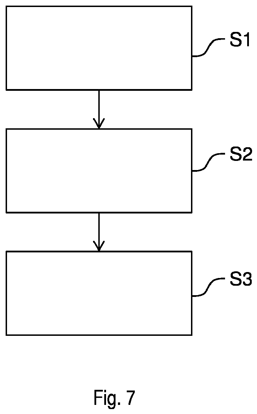

Fig. 7 shows a schematic block diagram in accordance with a method for producing a sorption filter 9 for a vehicle 1, e.g., as shown in Fig. 4 and Fig. 5.

In a step S1 a first material layer 42 and a second material layer 43 having a pleated shape are fixed distant to each other such that a wave-shaped hollow space 46 between the first material layer 42 and the second material layer 43 with at least one opening 47 is provided (see Fig. 8 left side). Thus, the frame is provided as an open frame 51. Further, the first plastic grid layer 39 and the second plastic grid layer 44 both connected to the frame 36 or part of it and distant to each other may be provided. The first material layer 42 may be fixed to the first plastic grid layer 39 and the second material layer 43 may be fixed to the second plastic grid layer 44 forming the wave-shaped hollow space 46 with the at least one opening 47 (see Fig. 8 left side). In a preprocessing step the first material layer 42 and the second material layer 43 may be pleated to form permanently the pleated shape. Preferably, only one opening 47 formed by end faces of the first material and the second material layers 42, 43 is provided.

In a step S2 a granulate 49 is filled into the hollow space 46 through the opening 47 such that the granulate 49 is sandwiched between the first material layer 42 and the second material layer 43 (see Fig. 8 left side). "Filling the granulate" may mean pouring it into the hollow space 46 by means of gravity. The hollow space 46 is filled until a compact bulk is facilitated, and no rattling occurs. Thus, decomposition of the sorption filter 9 may be avoided and a reliable sorption filter 9 can be provided.

In a step S3 the opening 47 is closed such that the granulate 49 is fixed as the sorbent granulate layer 41 in the sorption filter (see Fig 8 right side). The opening 47 is closed by means of a closing element 50, in particular a frame portion, closing the open frame 51 to form a closed frame 36 (see Fig. 8 fight side). The closing element 50 may be glued or welded to the frame 36. Thus, the granulate 41 is closed in the sorption filter 9.

Fig. 8 shows schematically the steps S1, S2 and S3 according to Fig. 7. On the left side an unfinished filter 48 without the sorbent granulate layer 41 is provided. The frame 51 includes the opening 47 and is provided, thus, as open frame 51. The first material layer 42 is glued to the first plastic grid layer 39 or open frame 51 by means of a glue connection 59. The second material layer 43 is glued to the second plastic grid layer 44 by means of a glue connection 60.

Granulate 49 is filled through the opening 47 into the hollow space 46 from one longitudinal side 62 of the open frame 51. Preferably, the open frame 51 stands on the other longitudinal side 63 when the hollow space 46 is filled. When the hollow space 46 is completely filled, the opening 47 can be closed, as shown on the right side of Fig. 8. The opening 47 can be closed by means of the closing element 50. The closing element 50 is glued by means of a glue connection 61 to the frame 36 and/or the longitudinal portion 37. The closing element 50 may part of the longitudinal portion 37. Alternatively, the closing element 50 may be the longitudinal portion 37. The closing element 50 may have an elongated cuboid shape.

Instead of the hollow space 46, the sorbent granulate layer 41 is provided filling the hollow space 46 completely. After connecting the closing element 50 to the open frame 51 the production of the sorption filter 9 may be finished. Thus, the right side of Fig. 8 shows the finished sorption filter 9.

### Reference Signs List

- 1: motor vehicle
- 2: body
- 3: interior
- 4: cartridge
- 5: housing
- 6: first housing portion
- 7: second housing portion
- 8: third housing portion
- 9: sorption filter
- 10: screw
- 11: screw
- 12: pressure element
- 13: spring
- 14: sealing surface
- 15: air intake
- 16: air outlet
- 17: air
- 18: chamber
- 19: chamber
- 20: sealing
- 21: sealing surface
- 22: pressure receiving element
- 23: pressure element
- 24: pressure spring
- 25: pressure receiving element
- 26: guiding element
- 27: guiding portion
- 28: guiding element
- 29: guiding portion
- 30: inlet pipe
- 31: outlet pipe
- 32: flange
- 33: flange
- 34: borehole
- 35: head portion
- 36: frame
- 37: longitudinal portion
- 38: head portion
- 39: first plastic grid layer
- 40: reinforcement element
- 41: sorbent granulate layer
- 42: first material layer
- 43: second material layer
- 44: second plastic grid layer
- 45: openings
- 46: hollow space
- 47: opening
- 48: unfinished filter
- 49: granulate
- 50: closing element
- 51: open frame
- 52: filtered air
- 53: end
- 54: stiffening ribs
- 55: stiffening ribs
- 56: plug and/or relief valve
- 57: plug and/or relief valve
- 58: frame attachment
- 59: glue connection
- 60: glue connection
- 61: glue connection
- 62: longitudinal side
- 63: longitudinal side

- D: thickness
- F1: pressure force
- F2: pressure force
- H: height
- L: length
- S1: step
- S2: step
- S3: step
- U: environment
- W: width

## Claims

1. A sorption filter (9) comprising:
a sorbent granulate layer (41) configured to adsorb and/or absorb gases, in particular CO2, water and/or VOCs;
a first material layer (42) having a pleated shape; and
a second material layer (43) having the pleated shape, the first material layer (42) and the second material layer (43) sandwiching the sorbent granulate layer (41) so that the sorbent granulate layer (41) has the pleated shape.

2. The sorption filter (9) according to claim 1, further comprising a frame (36) framing the sorbent granulate layer (41), the first material layer (42) and the second material layer (43) by enclosing end faces thereof.

3. The sorption filter (9) according to claim 2, further comprising a first plastic grid layer (39) and a second plastic grid layer (44) sandwiching the sorbent granulate layer (41), the first material layer (42) and the second material layer (43).

4. The sorption filter (9) according to claim 3, wherein the first plastic grid layer (39) and the second plastic grid layer (44) are connected to the frame (36) by one among injection molding to form an integral body, gluing and welding.

5. The sorption filter (9) according to claim 3 or 4, wherein the first plastic grid layer (39) and the second plastic grid layer (44) are wave-shaped and configured to stabilize the sorbent granulate layer (41), the first material layer (42) and the second material layer (43) in the pleated shape.

6. The sorption filter (9) according to one of claims 1-5, wherein each of the first material layer (42) and the second material layer (43) is a filter fleece layer or a metal mesh layer.

7. The sorption filter (9) according to one of claims -1-6, wherein the sorption filter (9) has a length (L) between 200-350 mm, in particular 250-300 mm, a width (W) between 100-250 mm, in particular 150-200 mm, and a height (H) between 20-60 mm, in particular 30-40 mm, and
the sorbent granulate layer (41) has a thickness (D) between 3-20 mm, in particular 5-10 mm.

8. The sorption filter (9) according to one of claims -1-7, further comprising a filter sealing (20) comprising a filter sealing surface (21) configured to be pressed against a cartridge sealing surface (14).

9. The sorption filter (9) according to one of claims -1 -8, further comprising at least one pressure receiving element (22, 25) configured to receive a pressure force (F1, F2) from a cartridge pressure element (12, 23).

10. A sorption filter cartridge (4) comprising:
the sorption filter (9) according to one of claims -1 -9; and
a housing (5) configured to receive the sorption filter (9).

11. The sorption filter cartridge (4) according to claim 10, wherein the housing (5) comprises:
a housing portion (8) having at least one pressure element (23), in particular having a pressure spring (24); and
a housing portion (7) comprising a cartridge sealing surface (14), and
the at least one pressure element (23) is configured to press the sorption filter (9) against the cartridge sealing surface (14).

12. The sorption filter cartridge (4) according to claim 10 or 11, further comprising:
an air intake (15) configured to receive unfiltered air (17) from an interior (3) of a vehicle (1) and/or from an environment (U) of the vehicle (1); and
an air outlet (16) configured to let out filtered air (17) to the interior (3) of the vehicle (1).

13. A method for producing a sorption filter (9), the method comprising:
fixing (S1) a first material layer (42) having a pleated shape and a second material layer (43) having the pleated shape to be distant to each other such that a wave-shaped hollow space (46) between the first material layer (42) and the second material layer (43) and having an opening (47) is provided;
filling (S2) a granulate (49) into the hollow space (46) through the opening (47) such that the granulate (49) is sandwiched between the first material layer (42) and the second material layer (43); and
closing (S3) the opening (47) such that the granulate (49) is fixed in the sorption filter (9).

14. The method according to claim 13, wherein the first material layer (42) and the second material layer (43) are fixed using an open frame (51), a first plastic grid layer (39) and a second plastic grid layer (44), the first plastic grid layer (39) and the second plastic grid layer (44) being connected to the open frame (51) and being distant to each other, the first material layer (42) being fixed to the first plastic grid layer (39), and the second material layer (43) being fixed to the second plastic grid layer (44).

15. The method according to claim 14, wherein the opening (47) is closed by a closing element (50) closing the open frame (51) to form a closed frame (36).
